# DEMANDE DE BREVET EUROPEEN

(11) **EP 1 522 821 A1**
(43) Date de publication de la demande: **13.04.2005**
(21) Numéro de dépôt: 04104879.4
(22) Date de dépôt: 05.10.2004
(51) Int. Cl.: G01C 19/56

(54) **Gyromètre micromécanique inertiel à diapason**

(30) Priorité: 10.10.2003 FR 0311901
(71) Demandeur: Thales, 92200 Neuilly Sur Seine (FR)
(72) Inventeur: Leverrier, Bertrand, c/o Thales Intellectual Prop., 94117 Arcueil Cedex (FR); Inglese, Jérôme, c/o Thales Intellectual Prop., 94117 Arcueil Cedex (FR); Rougeot, Claude, c/o Thales Intellectual Prop., 94117 Arcueil Cedex (FR)
(74) Mandataire: Beylot, Jacques

(57) **Abrégé**

L'invention concerne un gyromètre (100) micro-usiné à structure mobile plane ancrée sur un substrat fixe (5) par des pieds d'ancrage, le substrat fixe (5) étant monté sur un substrat support (3) par des moyens de fixation (4), la structure mobile comportant au moins deux ensembles mobiles symétriques par rapport à un axe de symétrie A1; les pieds d'ancrage sont situés en dehors de cet axe A1. Le substrat fixe (5) comporte des gravures visant à isoler en partie au moins une zone (8, 8') du reste du substrat fixe, cette zone comportant une portion de substrat fixe qui comprend au moins un pied d'ancrage, et le substrat fixe (5) est monté sur le substrat support (3) par des moyens de fixation (4) appliqués en dehors de la zone (8, 8').

## Description

Le domaine de l'invention est celui des micro-gyromètres destinés à la mesure de vitesses angulaires.

L'utilisation des micro-gyromètres est entrée dans une phase de croissance continuelle, notamment dans les domaines de l'aéronautique, de l'automobile, de la robotique, et dans d'autres domaines encore, et ceci grâce au fait qu'aujourd'hui ces microcapteurs arrivent à allier leur robustesse aux avantages issus de leur taille extrêmement petite. A cela s'ajoute le fait de fabriquer ces micro-gyromètres de manière collective (opérations de fabrication effectuées sur des tranches entières de multiples gyromètres ultérieurement divisés en gyromètres individuels), ce qui rend le coût de fabrication compétitif par rapport aux dispositifs antérieurs.

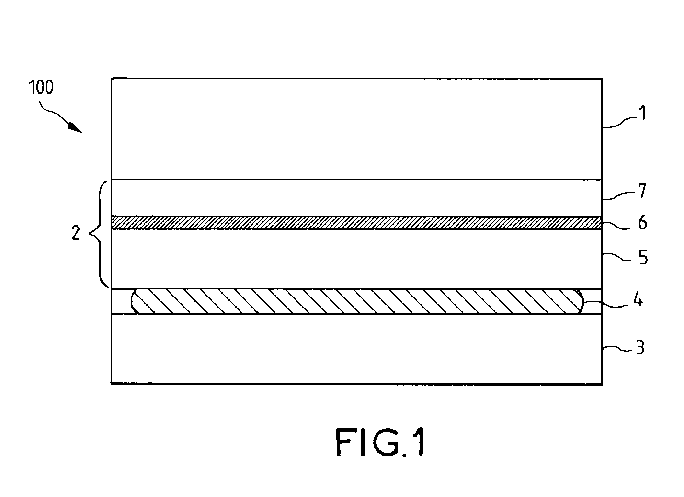

On rappelle qu'un micro-gyromètre inertiel 100 peut être réalisé à partir d'une superposition de trois substrats micro-usinés schématiquement représentés figure 1, qui peuvent être trois substrats de silicium. Le premier et le troisième substrats respectivement référencés 1 et 3, servent de capot d'une enceinte fermée dans laquelle on fait de préférence le vide, tandis que le deuxième substrat 2, ou substrat intermédiaire, est usiné pour réaliser une structure mobile ayant les propriétés mécaniques désirées. Le premier substrat peut par ailleurs servir à amener vers le deuxième substrat des courants électriques d'excitation de la structure mobile parallèlement au plan des substrats, et peut, grâce à des électrodes placées en regard de la structure mobile du substrat intermédiaire, servir à supporter des circuits de détection des mouvements de la structure mobile perpendiculairement au plan des substrats. Le troisième substrat est relié à un système de traitement des informations mesurées.

Les premier et troisième substrats peuvent être réalisés selon des techniques de microélectronique, avec des opérations de diffusion, de dépôts de couches métalliques, de gravure de ces couches. Le substrat intermédiaire est quant à lui réalisé également avec ce type d'opérations, mais de plus, étant donné que sa fonction principale est mécanique, il est réalisé par des opérations de gravures profondes visant à découper une structure micromécanique à motifs très fins et à épaisseur très fine.

Typiquement, l'usinage de la structure mobile peut être réalisée en utilisant comme substrat intermédiaire 2 un substrat de silicium sur isolant (SOI), mais d'autres méthodes sont également possibles. Un substrat de silicium sur isolant est constitué d'un substrat monolithique fixe 5 de silicium de quelques centaines de micromètres d'épaisseur qui porte sur sa face avant une fine couche d'oxyde 6 de silicium elle-même recouverte d'une couche 7 de silicium monocristallin de quelques dizaines de micromètres d'épaisseur. L'usinage consiste à attaquer le silicium monocristallin 7 par sa face avant jusqu'à atteindre la couche d'oxyde, avec un produit de gravure sélectif qui attaque le silicium sans attaquer significativement l'oxyde. On arrête la gravure lorsque la couche 6 d'oxyde est mise à nu. Cette couche 6 d'oxyde peut elle-même être enlevée par attaque sélective avec un autre produit de manière à ne conserver que la couche superficielle 7 de silicium. Celle-ci peut alors être gravée selon les motifs de surface désirés au moyen de techniques de photogravure en usage en microélectronique pour obtenir ainsi la structure plane mobile désirée.

Etant donné que la structure plane mobile ne peut pas 'flotter' par rapport au corps du gyromètre, c'est-à-dire par rapport au substrat monolithique fixe 5 de silicium, il faut qu'elle soit ancrée au substrat monolithique en des points d'ancrage qui ne perturbent pas la mobilité de la structure plane mobile.

Dans la suite on désignera par pieds d'ancrage les points d'ancrage des éléments mis en mouvement par les forces dépendant de la vitesse angulaire à mesurer, le terme point d'ancrage correspondant aux éléments d'excitation. Lorsque, comme on le verra par la suite, les éléments d'excitation de la structure sont également mis en mouvement par les forces dépendant de la vitesse angulaire à mesurer, le terme pied d'ancrage prévaudra.

Le substrat intermédiaire 2 est fixé au troisième substrat 3 au moyen par exemple d'une colle 4 polymère ou d'une soudure uniformément répartie entre le substrat monolithique fixe 5 et le troisième substrat 3. On désigne aussi ce troisième substrat 3 par l'appellation substrat support.

Le gyromètre 100 est destiné à être embarqué à bord d'un aéronef, d'un véhicule mobile ou plus généralement à bord d'un système mobile.

On rappelle tout d'abord que la structure d'un gyromètre performant réalisé selon ces techniques, comprend généralement deux masses mobiles excitées en vibration et reliées en diapason, c'est-à-dire que les deux masses sont reliées à une structure de couplage centrale qui transfère l'énergie de vibration de la première masse vers la deuxième et réciproquement.

Les masses sont excitées en vibration dans le plan de la structure par des forces électrostatiques appliquées par l'intermédiaire de peignes d'électrodes interdigitées. Cette vibration dans le plan de la structure s'exerce perpendiculairement à un axe dit « axe sensible » du gyromètre, perpendiculaire à la direction de cette vibration. Lorsque le gyromètre tourne avec une certaine vitesse angulaire autour de son axe sensible, la composition de la vibration forcée avec le vecteur de rotation angulaire engendre, par effet Coriolis, des forces qui mettent les masses mobiles en vibration naturelle perpendiculairement à la vibration d'excitation et à l'axe de rotation ; l'amplitude de cette vibration naturelle est proportionnelle à la vitesse de rotation. Les deux masses vibrent en opposition de phase de manière à obtenir un effet diapason.

La vibration naturelle est détectée par une structure de détection électrique. Les signaux électriques qui en résultent sont exploités pour en déduire une valeur de la vitesse angulaire autour de l'axe sensible.

Dans certains cas, l'axe sensible est situé dans le plan de la plaque et la structure de détection détecte un mouvement perpendiculaire au plan des masses mobiles. Dans d'autres cas, l'axe sensible du gyromètre est l'axe Oz perpendiculaire au plan de la plaque. Le mouvement d'excitation des masses mobiles est engendré dans une direction Ox du plan alors qu'un mouvement résultant de la force de Coriolis est détecté dans une direction Oy du même plan, perpendiculaire à Ox.

Sur un vrai diapason, la structure vibrante est fixée à l'environnement extérieur par un seul point qui est un noeud de vibration de la structure vibrante. Cela permet de confiner l'énergie de vibration à l'intérieur de la structure vibrante et ainsi d'obtenir des coefficients de qualité élevés.

Sur un substrat plan la structure vibrante est fixée en général par plusieurs pieds d'ancrage distants. Mais ces pieds d'ancrage ne sont pas toujours des noeuds de vibration de la structure vibrante, si bien qu'une partie de l'énergie vibratoire est transmise à l'environnement extérieur via le substrat.

Un but important de l'invention est donc d'éviter cette perte d'énergie afin d'améliorer l'effet diapason.

Pour atteindre ces buts, l'invention propose un gyromètre micro-usiné à structure mobile plane ancrée sur un substrat fixe par des pieds d'ancrage, le substrat fixe étant monté sur un substrat support par des moyens de fixation, la structure mobile comportant au moins deux ensembles mobiles symétriques par rapport à un axe de symétrie A1 contenu dans ce plan, et couplés par une structure de couplage reliant ces deux ensembles pour permettre un transfert d'énergie mécanique de vibration entre eux, les pieds d'ancrage étant situés en dehors de cet axe de symétrie A1. Ce gyromètre est principalement caractérisé en ce que le substrat fixe comporte des gravures visant à isoler en partie au moins une zone du reste du substrat fixe, cette zone comportant une portion de substrat fixe qui comprend au moins un pied d'ancrage, et en ce que le substrat fixe est monté sur le substrat support par des moyens de fixation appliqués en dehors de la zone.

De préférence, la zone comporte en outre une portion de substrat fixe, située le long de l'axe A1 cette portion étant reliée à la portion comportant au moins un pied d'ancrage.

En pratique, les moyens de fixation sont appliqués sur les bords du substrat fixe.

En isolant ainsi en partie les pieds d'ancrage des bords du substrat fixe, on diminue les pertes d'énergie de la structure mobile, ces pertes transitant par les pieds d'ancrage et on améliore en conséquence l'effet diapason de la structure c'est-à-dire entre autres le coefficient de qualité du résonateur.

D'autres caractéristiques et avantages de l'invention apparaîtront à la lecture de la description détaillée qui suit, faite à titre d'exemple non limitatif et en référence aux dessins schématiques annexés dans lesquels :
la figure 1 déjà décrite représente une vue en coupe d'un capteur inertiel réalisé à partir d'une superposition de substrats,
la figure 2 représente un exemple de gyromètre connu,
la figure 3 représente schématiquement selon l'invention le substrat fixe correspondant à la structure mobile de la figure 2 vu par sa face arrière Fₐᵣᵣ,
la figure 4 représente vus en coupe la structure mobile de la figure 2, le substrat fixe et le troisième substrat correspondants,
la figure 5 représente une variante connue de la structure de gyromètre de la figure 2,
la figure 6 représente vus en coupe la structure mobile de la figure 5, le substrat fixe et le troisième substrat correspondants,
la figure 7 représente vue en coupe une variante de l'invention représentée à la figure précédente,
la figure 8 représente le substrat fixe correspondant à la structure mobile de la figure 5 vu par sa face arrière Fₐᵣᵣ.

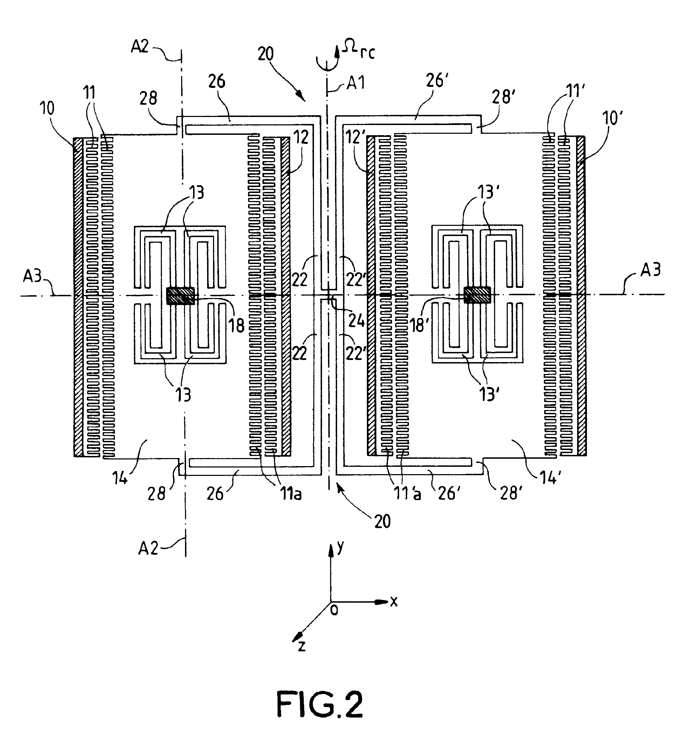

On va à présent décrire un exemple de gyromètre selon l'invention en référence à la figure 2.

Dans la suite, d'une figure à l'autre, les mêmes éléments sont désignés par les mêmes références.

Sur la figure 2, on voit que la disposition générale de la structure mobile plane est symétrique par rapport à un premier axe A1 (axe orienté dans la direction Oy sur le repère orthogonal de la figure 2). Le gyromètre fournit une mesure électrique de la vitesse de rotation angulaire de la structure autour de cet axe A1. Par exemple, si le gyromètre est calé dans un avion de manière à avoir son axe A1 dans l'axe longitudinal de l'avion, le gyromètre mesurera des vitesses de roulis de l'avion.

La structure plane vibrante étant symétrique, la même référence avec un indice 'prime' est utilisée à droite de l'axe A1 pour désigner un élément qui est le symétrique d'un élément de la partie gauche. Les explications seront données en général à propos de la partie gauche et ne seront pas répétées à propos de la partie droite lorsque cela n'est pas nécessaire.

La structure plane comporte deux masses mobiles vibrantes désignées par 14, 14'. Chaque masse est soutenue par quatre bras de flexion 13, 13'. Les bras de flexion 13 sont attachés à la masse mobile d'un côté, à un pied d'ancrage fixe de l'autre.

D'autre part, les bras de flexion 13 ont de préférence chacun une forme repliée en U. Une des branches du U est fixée, à son extrémité, au pied d'ancrage, l'autre branche est fixée, à son extrémité, à la masse mobile 14. Les branches sont orientées longitudinalement, c'est-à-dire parallèlement à l'axe A1.

Il y a quatre bras de flexion 13 pour chaque masse mobile. L'ensemble de la masse mobile et des quatre bras de flexion est constitué de préférence symétriquement par rapport à un deuxième axe A2, qui est parallèle à l'axe A1. En pratique, l'ensemble de la masse mobile et des quatre bras de flexion est symétrique également par rapport à un troisième axe A3, perpendiculaire à l'axe A1.

Le pied d'ancrage, désigné par 18 sur la figure 2, est alors de préférence commun aux quatre bras de flexion, et il est situé au centre de gravité de la masse mobile, lui-même situé à l'intersection des axes de symétrie A2 et A3.

Lors de la gravure de la plaque de silicium aminci, un espace est donc réservé au centre de la masse mobile pour y découper les quatre bras de flexion en U, la masse mobile proprement dite entourant ces quatre bras et le pied d'ancrage 18.

La liaison entre les bras de flexion et la masse mobile ou entre les bras de flexion et le pied d'ancrage est de type 'poutre encastrée'.

L'utilisation de bras repliés en tant que bras de flexion aide à s'affranchir des effets de non-linéarités, grâce à la très grande souplesse mécanique spécifique à cette forme, tant dans le plan que perpendiculairement au plan. Ces bras permettent de relaxer des éventuelles contraintes intrinsèques aux matériaux constituants.

Dans la zone la plus extérieure de la structure, c'est-à-dire dans la partie la plus éloignée de l'axe A1, on trouve un peigne interdigité 11 servant à l'excitation d'une vibration de la masse mobile dans le plan de la structure (direction Ox par rapport au repère orthogonal dessiné sur la figure). Le peigne d'excitation 11 comprend deux demi-peignes en vis-à-vis, l'un porté par la masse mobile, l'autre ancré par un point d'ancrage 10 sur le corps du gyromètre. Les doigts de l'un des demi-peignes sont des électrodes pénétrant dans les intervalles entre les doigts-électrodes de l'autre demi-peigne. L'application de tensions alternatives entre les demi-peignes, à une fréquence proche de ou égale à la fréquence de résonance mécanique de la structure, engendre une vibration de la masse mobile dans le plan de la structure.

Les demi-peignes sont schématisés sur toutes les figures comme s'ils étaient juxtaposés mais on doit comprendre qu'il y a une interpénétration.

Du côté intérieur de la structure vibrante, c'est-à-dire du côté proche de l'axe sensible, il est prévu un autre peigne interdigité 11 a, avec un demi-peigne porté par la masse mobile et un demi-peigne ancré par un point d'ancrage 12 sur le corps du gyromètre. Ce peigne sert à la détection de la vibration d'excitation de la masse dans le plan de la structure. L'intérêt de cette détection est qu'elle permet d'asservir électroniquement la fréquence et l'amplitude d'excitation du peigne extérieur 11 pour l'ajuster à la fréquence de résonance mécanique de la structure. Il faut en effet maximiser l'amplitude de la vibration pour augmenter la sensibilité du gyromètre, et cette maximisation suppose que la fréquence d'excitation soit bien accordée sur la fréquence de résonance mécanique.

Les bras de flexion 13 supportent la masse mobile en autorisant un mouvement de vibration d'amplitude relativement importante (quelques micromètres). Ils doivent également autoriser un mouvement de vibration de la masse perpendiculairement au plan puisque c'est ce mouvement qu'on cherche à détecter. Ils servent de ressorts de rappel pour ces deux mouvements et leur raideur doit être suffisante pour exercer cette force de rappel.

Dans tout ce qui suit, on utilisera l'appellation 'transversal' pour les orientations perpendiculaires à l'axe sensible (dans le plan de la structure) et 'longitudinal' pour les orientations parallèles à l'axe sensible.

Etant donné que la structure plane vibrante ne peut pas 'flotter' par rapport au corps du gyromètre, elle est ancrée en des pieds d'ancrage.

On notera que les pieds d'ancrage ont cependant un inconvénient en ce sens qu'une partie de l'énergie mécanique de vibration d'une masse est transmise (et de ce fait perdue) au pied d'ancrage au lieu d'être transmise à l'autre masse.

La structure de couplage est attachée directement à la masse mobile sans passer par les bras de flexion.

La structure de couplage entre masses de la figure 2 comprend essentiellement une forme de H à deux liaisons longitudinales 22, 22', une liaison transversale 24 entre les liaisons longitudinales, et des éléments d'accrochage des masses à l'extrémité des liaisons longitudinales, éléments d'accrochage désignés par 26, 28 pour la première masse, et 26', 28' pour la deuxième.

Plus précisément, les liaisons longitudinales 22, 22' s'étendent le long de l'axe de symétrie longitudinal A1 et à proximité immédiate de celui-ci, sur toute la longueur des masses mobiles. Une courte liaison transversale 24 les relie. Cette liaison est de préférence le long de l'axe de symétrie transversal A3. Toute l'énergie de vibration mécanique des masses passe par cette liaison transversale 24 qui joue le rôle du pied d'un diapason, mais ce pied n'est pas ancré dans le corps du gyromètre. Elle sert à transmettre une énergie de vibration d'une masse vers l'autre masse, de la même manière qu'une branche d'un diapason musical, frappée pour être mise en vibration, engendre automatiquement, par couplage d'énergie mécanique à travers le pied du diapason, une vibration de l'autre branche. Ce couplage est utile pour assurer la mise en phase des vibrations des deux masses mobiles, sachant qu'il est difficile de synchroniser exactement ces phases par les moyens purement électriques que constituent les peignes d'excitation.

A l'extrémité de la liaison longitudinale 22, de part et d'autre de la masse mobile, c'est-à-dire de part et d'autre de l'axe de symétrie transversal A3, on trouve les éléments d'accrochage de la masse. Ces éléments comprennent, aussi bien au-dessus de la masse 14, qu'au-dessous d'elle, un bras transversal 26 de chaque côté de la masse, et un court bras longitudinal 28 servant d'attache entre la masse et le bras transversal 26. Les courts bras longitudinaux 28 sont de préférence sur le deuxième axe de symétrie longitudinale A2. Mais la masse mobile pourrait être accrochée à la rigueur en deux points de chaque bras transversal 26 par deux courts bras longitudinaux 28 symétriques par rapport à l'axe A2.

Bien entendu, les éléments d'accrochage 26', 28' de l'autre masse mobile à l'extrémité des liaisons longitudinales 22' sont rigoureusement symétriques des éléments 26, 28.

Dans l'exemple de la figure 2, la structure de couplage 20 n'est pas fixée, ni directement ni indirectement, à un pied d'ancrage.

Selon l'invention, le substrat fixe comporte des gravures qui définissent deux zones en regard des pieds d'ancrage présents sur la face avant du substrat et le substrat fixe est monté sur le substrat support par des moyens de fixation situés en des endroits prédéterminés tels que l'énergie de vibration des masses qui transite par ces pieds d'ancrage, ne transite pas ou quasiment pas par ces moyens de fixation.

Une solution simple à réaliser, consiste à isoler en partie les pieds d'ancrage des bords du substrat fixe et à mettre les moyens de fixation sur les bords du substrat fixe. En isolant ainsi en partie les pieds d'ancrage de ces moyens de fixation, on diminue les pertes d'énergie de la structure mobile, ces pertes transitant par les pieds d'ancrage et on améliore en conséquence l'effet diapason de la structure c'est-à-dire entre autres le coefficient de qualité du résonateur.

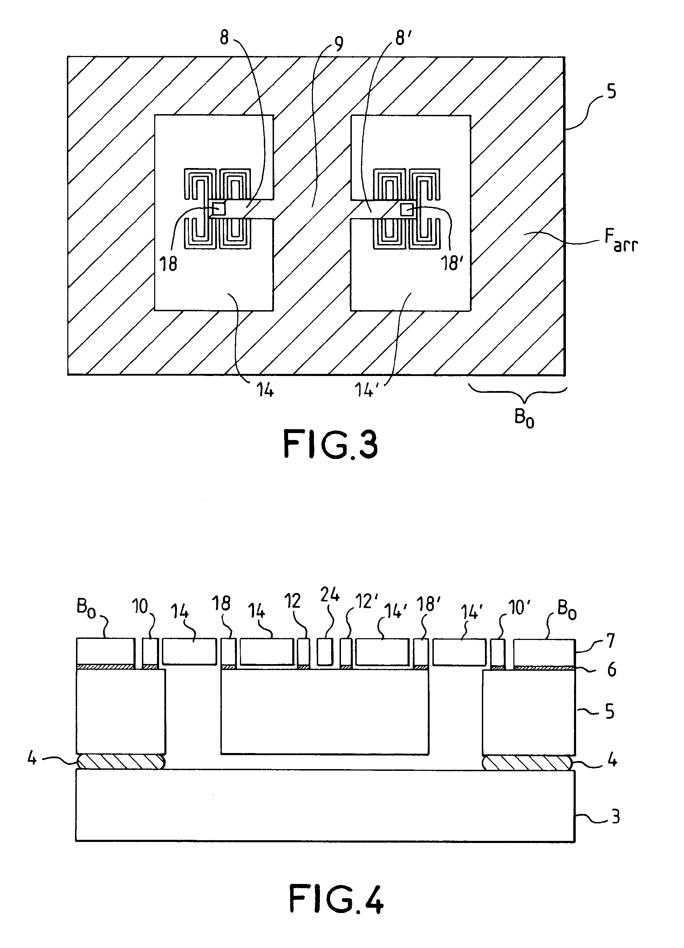

On va décrire un mode de réalisation de l'invention en relation avec les figures 3 et 4.

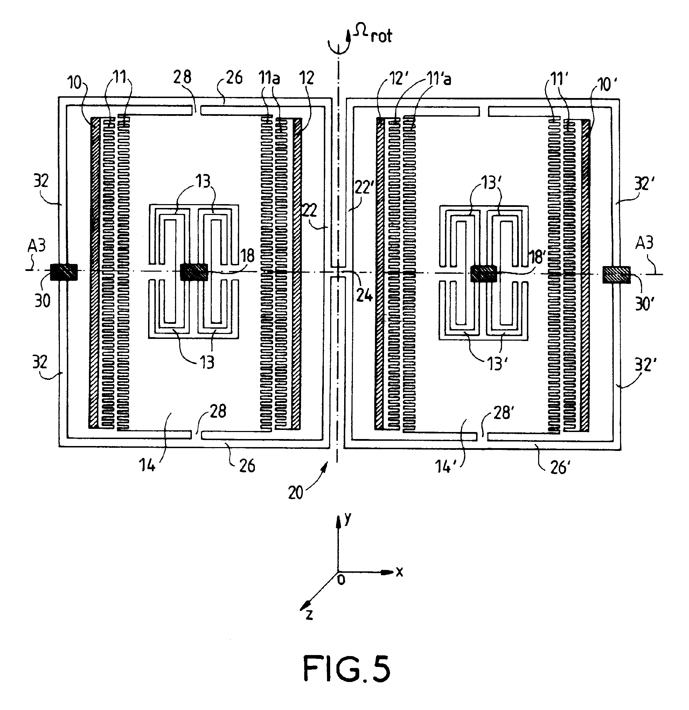

La figure 3 représente le substrat fixe 5 vu par sa face arrière Fₐᵣᵣ, cette face arrière correspondant à la vue de dessus représentée figure 5. Selon ce mode de réalisation, les deux zones ont la forme de bras 8 et 8' qui visent à isoler en partie les pieds d'ancrage du reste du substrat fixe. Les bras 8 et 8' sont reliés au reste du substrat fixe, en l'occurrence les bords par un pont central. L'axe des bras 8 et 8' est sur l'axe de symétrie transversal A3 puisque les pieds d'ancrage 18 et 18' de la face avant et indiqués en pointillé sur cette figure, sont sur cet axe A3. L'axe du pont 9 est celui de l'axe A1.

La figure 4 représente la structure mobile, le substrat fixe et le troisième substrat en coupe selon l'axe de symétrie transversal A3 ; le troisième substrat 3 est fixé au substrat fixe 5 par des moyens de fixation 4 appliqués à la périphérie du substrat fixe 5, sur ses bords Bo.

La figure 5 représente une variante de réalisation du gyromètre précédent, dans laquelle la structure de couplage 20 est fixée à deux pieds d'ancrage 30 et 30' symétriques par rapport à l'axe A1. Les pieds d'ancrage ont l'avantage de faciliter un mouvement de translation verticale pure des masses mobiles, éliminant un effet de rotation partielle dû au fait que les masses se déplacent en opposition de phase par rapport au plan de la figure, c'est-à-dire que l'une monte au-dessus du plan de la figure pendant que l'autre descend. Cette opposition de phase est en effet engendrée par le fait que les masses sont excitées en phase par les peignes interdigités 11, 11' (c'est-à-dire que l'une des masses est tirée vers la droite pendant que l'autre est tirée vers la gauche puisque les peignes exercent simultanément une force d'attraction chacun de son côté). Et on souhaite cette opposition de phase de la vibration des masses perpendiculairement au plan puisqu'elle permet d'effectuer une détection directement en mode différentiel, en éliminant les effets de mode commun qui seraient engendrés si les masses se déplaçaient simultanément d'un même côté du plan de la structure.

On notera que là encore, les pieds d'ancrage ont cependant un inconvénient en ce sens qu'une partie de l'énergie mécanique de vibration d'une masse est transmise (et de ce fait perdue) au pied d'ancrage au lieu d'être transmise à l'autre masse.

De préférence, les pieds d'ancrage 30 et 30' sont sur l'axe de symétrie transversal A3 et sont situés en des points éloignés de l'axe sensible ; ces points sont de préférence au-delà des peignes d'excitation 11, 11'. Pour cela, la structure de couplage est constituée comme à la figure 2 mais les bras transversaux 26 se prolongent au-delà des bras longitudinaux 28, et se referment autour des masses mobiles par une liaison longitudinale supplémentaire 32 (32' pour l'autre masse mobile) qui court le long de la masse mobile du côté opposé à l'axe sensible. La structure de couplage, symétrique par rapport à l'axe sensible, encadre donc complètement chaque masse mobile et la liaison des deux parties symétriques de cette structure est faite, comme à la figure 2, par une courte liaison transversale 24 entre les liaisons longitudinales 22 et 22'.

Le pied d'ancrage 30, 30' est situé au milieu de la liaison longitudinale supplémentaire 32, 32'.

Pour ce type de gyromètre l'axe des bras du substrat fixe qui suit l'axe des pieds d'ancrage est l'axe A3.

Selon un premier mode de réalisation de ce gyromètre de la figure 5, les bras 8 et 8' du substrat fixe s'étendent de manière à isoler les pieds d'ancrage 18 et 18'. On obtient comme vue de la face arrière du substrat fixe une vue correspondant à celle de la figure 4.

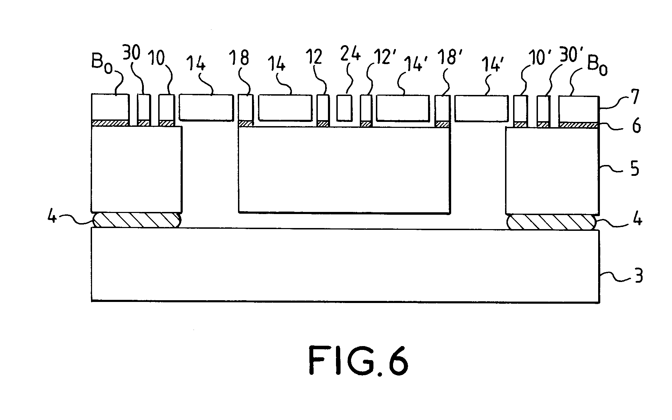

On a représenté figure 6 la structure mobile, le substrat fixe et le troisième substrat en coupe selon l'axe A3. Seuls les pieds d'ancrage 18 et 18' sont isolés du reste du substrat fixe ; les pieds d'ancrage 30 et 30' de la structure de couplage 20 ne sont pas isolés. Le substrat fixe 5 est monté sur le troisième substrat 3 (ou substrat support) par des moyens de fixation 4 appliqués à la périphérie.

Selon cette configuration, seuls les pieds d'ancrage 18 et 18' sont concernés par la réduction de la perte d'énergie ; en revanche, les pieds d'ancrage 30 et 30' du cadre de couplage ne sont pas découplés du substrat 3. Mais comme le cadre de couplage est très souple, ces pieds d'ancrage 30 et 30' ne transmettent que très peu d'énergie de vibration.

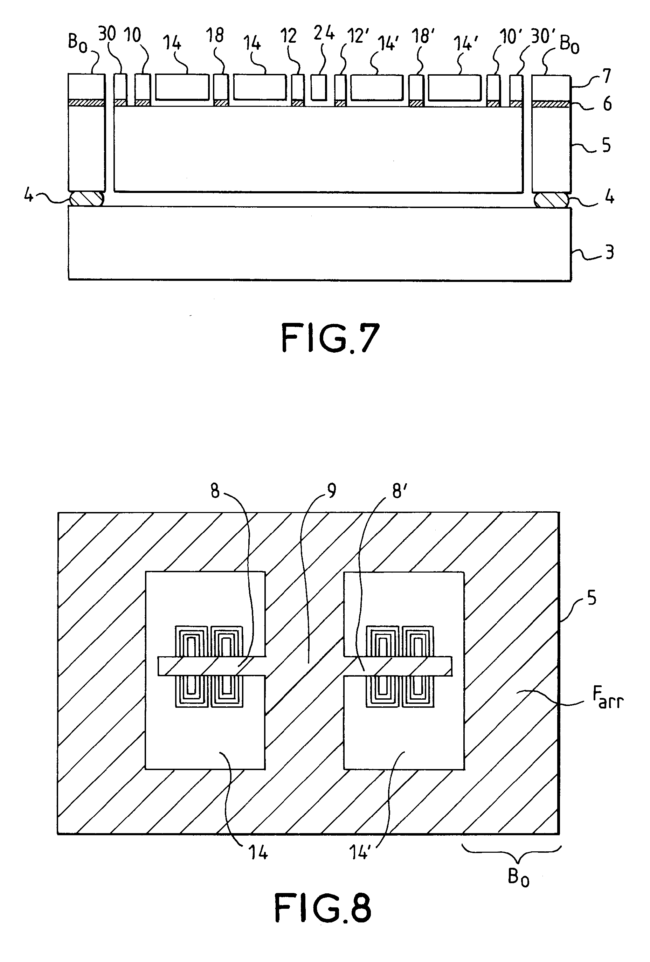

Selon une variante de ce mode de réalisation, représentées figures 7 et 8, les bras 8 et 8' du substrat fixe se prolongent pour isoler également les pieds d'ancrage 30 et 30'.

On retrouve pour ces deux derniers modes de réalisation les avantages déjà mentionnés, à savoir une diminution des pertes d'énergie transitant par les pieds d'ancrage.

Plus généralement, l'invention s'applique à tout autre gyromètre comportant une structure mobile comprenant deux ensembles mobiles symétriques par rapport à un axe de symétrie A1, et couplés par une structure de couplage, la structure mobile étant ancrée à un substrat fixe par des pieds d'ancrage situés en dehors de l'axe de symétrie.

Chaque ensemble mobile peut ne comporter qu'une masse mobile comme décrit dans les exemples précédents.

Il peut aussi comporter plusieurs éléments mobiles par exemple deux éléments mobiles reliés entre eux : comme premier élément mobile, un cadre inertiel et comme second élément mobile, une masse inertielle mobile centrale entourée par le cadre. La masse inertielle mobile aussi désignée masse de détection ne peut se déplacer que selon une direction de détection, par exemple Oy (axe vertical dans le plan de la figure) ; le cadre inertiel peut se déplacer selon l'axe Oy et selon un axe Ox perpendiculaire à Oy et également situé dans le plan de la figure. Le gyromètre fournit une mesure électrique de la vitesse de rotation angulaire de la structure autour de l'axe Oz perpendiculaire au plan de la plaque. On excite une vibration du cadre inertiel dans la direction Ox ; lorsque le gyromètre tourne autour de son axe Oz, une vibration du cadre est engendrée selon l'axe Oy. Cette vibration selon Oy est transmise à la masse, alors que la vibration selon Ox n'est pas transmise. Bien sûr, une structure d'excitation de la vibration est associée au cadre, et une structure de détection de vibration est associée à la masse inertielle de détection.

## Revendications

1. Gyromètre (100) micro-usiné à structure mobile plane ancrée sur un substrat fixe (5) par des pieds d'ancrage, le substrat fixe (5) étant monté sur un substrat support (3) par des moyens de fixation (4), la structure mobile comportant au moins deux ensembles mobiles symétriques par rapport à un axe de symétrie A1 contenu dans ce plan, et couplés par une structure de couplage reliant ces deux ensembles pour permettre un transfert d'énergie mécanique de vibration entre eux, les pieds d'ancrage étant situés en dehors de cet axe de symétrie A1, **caractérisé en ce que** le substrat fixe (5) comporte des gravures visant à isoler en partie au moins une zone (8, 8') du reste du substrat fixe, cette zone comportant une portion de substrat fixe qui comprend au moins un pied d'ancrage, et **en ce que** le substrat fixe (5) est monté sur le substrat support (3) par des moyens de fixation (4) appliqués en dehors de la (ou des) zone(s) (8, 8').

2. Gyromètre (100) selon la revendication précédente, **caractérisé en ce que** la zone comporte en outre une portion de substrat fixe (9), située le long de l'axe A1, cette portion étant reliée à la portion comportant au moins un pied d'ancrage.

3. Gyromètre (100) selon la revendication précédente, **caractérisé en ce que** la portion comportant au moins un pied d'ancrage comprend au moins deux bras (8, 8') situés de part et d'autre de la portion (9) située le long de l'axe A1.

4. Gyromètre (100) selon l'une des revendications précédentes, **caractérisé en ce que** les moyens de fixation (4) sont appliqués sur les bords du substrat fixe.

5. Gyromètre (100) selon l'une des revendications précédentes, **caractérisé en ce que** chaque ensemble mobile comprend deux masses mobiles (14, 14') attachées à des bras de flexion (13, 13'), une structure (11) d'excitation de la vibration de chaque masse dans le plan de la structure, une structure de détection d'une vibration des masses transversalement au plan.

6. Gyromètre (100) selon la revendication précédente, **caractérisé en ce que** les bras de flexion (13) reliés à une masse mobile (14) sont reliés par ailleurs à au moins un pied d'ancrage (18), la structure de couplage entre masses étant reliée directement aux masses mobiles d'une manière indépendante des bras de flexion, cette structure comprenant au moins deux liaisons longitudinales (22, 22') s'étendant de part et d'autre de l'axe sensible, parallèlement à celui-ci, entre les masses mobiles, au moins une liaison transversale (24) reliant les deux liaisons longitudinales, et au moins deux bras transversaux (26) reliant chaque masse mobile à une liaison longitudinale respective (22), ces deux derniers bras transversaux étant situés de part et d'autre de la masse mobile et étant reliés à la masse mobile.
